# EUROPEAN PATENT SPECIFICATION

(11) **EP 1 571 844 B1**
(45) Date of publication and mention of the grant of the patent: **25.04.2012**
(21) Application number: 05251326.4
(22) Date of filing: 04.03.2005
(51) Int. Cl.: H04W 84/12, H04L 12/58

(54) **Wireless local area network distribution system**
Verteilungssystem für drahtloses lokales Netzwerk
Système de distribution pour réseau local sans fil

(30) Priority: 05.03.2004 GB 0404978
(43) Date of publication of application: 07.09.2005
(73) Proprietor: Technetix Group Limited, Burgess Hill West Sussex RH15 9TZ (GB)
(72) Inventor: Broadhurst, Paul Anthony Technetix PLC, Burgess Hill West Sussex RH15 9TZ (GB)
(74) Representative: Forsyth, Helen Jane

(56) References cited:
- EP-A- 1 047 225
- EP-A- 1 248 412
- WO-A-2004/015902
- WO-A-2004/073331
- GB-A- 2 334 406
- JP-A- 10 234 028
- US-A1- 2004 017 793

## Description

### Field of the Invention

This invention relates to a wireless local area network distribution system and to a cable distribution tap unit for use in such a system.

### Background to the Invention

Wireless local area network (LAN) technology has become an established method for providing local area networks for allowing broadband communications and Internet access in offices and homes.

Wireless LAN technology, such as the IEEE802-11 series, Bluetooth, and HyperLAN, are very practical solutions for home local area networking within a small office or compact house. However the provision of wireless LAN access points is limited in practical use by the difficulties of propagating radio frequencies within buildings which are constructed of dense materials or obstructive materials. Thus the typical range that a given access point can service within a real building is often limited to 25 - 50m. This means that for large office buildings or for homes in apartment blocks, multiple access points need to be spaced at locations spread-out throughout the building in view of the limits to propagation of the signal.

Unfortunately the installation of the multiple access points at a spread of locations within a building requires a wired backbone. In a multiple floor building such wiring is very expensive as higher specification cables are needed to meet fire regulations governing cables travelling between floors. In addition installation of these multiple access points is disruptive and costly.

It is known to use the final 25 - 100m of a cable TV network to diplex Ethernet 10base-T signals generally in a 250KHz to 25MHz range with cable TV (CATV) signals typically in the range 65 - 1000MHz so as to supply broadband access and CATV access using hard wired connections direct to computers. However such systems require large amounts of wiring and expensive connection devices.

The present invention aims to provide a wireless local area network which overcomes at least some of the disadvantages associated with the prior art.

### Summary of the Invention

In accordance with one aspect of the present invention, there is provided a wireless local area network distribution system comprising a television distribution system carrying a main signal from which a television signal and a data signal are derivable, and characterised by at least one distribution unit comprising means for deriving the data signal from the main signal and further comprising an antenna element for receiving the data signal and for transmitting the data signal wirelessly. This allows an existing TV distribution system and the associated wiring to be used to feed multiple WLAN access points within a building, so avoiding the need for additional cabling and in particular avoiding the need for cabling which runs between floors.

In accordance with another aspect of the present invention, there is provided a distribution unit for use within a wireless local area network distribution system, the distribution unit comprising means for deriving a data signal from a main signal and further comprising an antenna element for receiving and transmitting the data signal wirelessly.

The television distribution system may be a community TV broadcast, distribution system or a cable TV distribution system, and is typically installed in a multiple dwelling unit or apartment block with a number of floors.

The data signal is preferably in accordance with the Ethernet protocol, and in particular the Ethernet protocol 10base-T or 100baseTX.

With reference to either aspect of the present invention, typically the distribution unit will allow for both transmission and reception of the data signal. Thus preferably the distribution unit incorporates means for recombining the data signal with the main signal.

The distribution unit may also comprise means for deriving the television signal from the main signal, the distribution unit further comprising at least one port for transmission/reception of the television signal.

In one preferred embodiment, the at least one port will be adapted to communicate with a cable distribution tap associated with an existing television distribution system, so allowing the system to be upgraded to a wireless LAN without changing taps or replanning the network.

The distribution unit may, in a preferred embodiment, comprise a first diplexer for splitting the television signal and the data signal from the main signal and a local area network (LAN) switch for receiving the data signal from the diplexer, the LAN switch having a first outlet for wireless transmission/reception of the data signal and a second outlet for passing the data signal to a second diplexer for recombination of the data signal with the television signal. In this way a main signal carrying a television signal and a data signal, typically by diplexing, can be split for use separately by televisions and computers and the like. The data signal is wirelessly communicated to data receiving and modifying equipment, such as a computer, and a modified data signal received by the unit and recombined with the television signal, which may also have been modified by a user, before return of the main signal to the service provider.

The invention will now be described with reference to the accompanying drawings in which:
Figure 1 shows a schematic diagram of a TV distribution system in a multiple dwelling unit;
Figure 1a shows a schematic of a distribution tap wired on each floor;
Figure 2 shows a wireless local area network distribution system in accordance with the present invention;
Figure 3 shows a first embodiment of a distribution unit for use in the present invention; and
Figure 4 shows a schematic of a further distribution unit in accordance with the present invention.

### Description

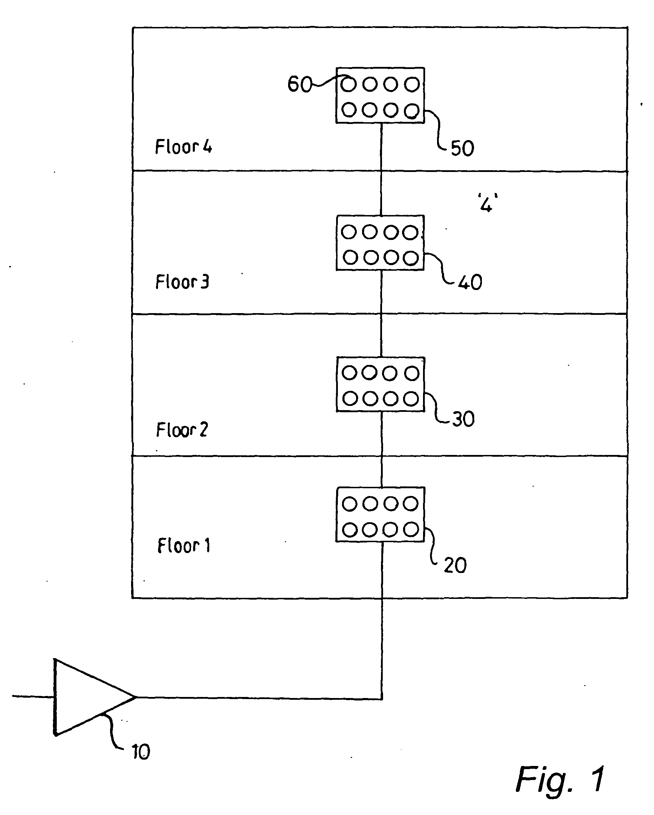

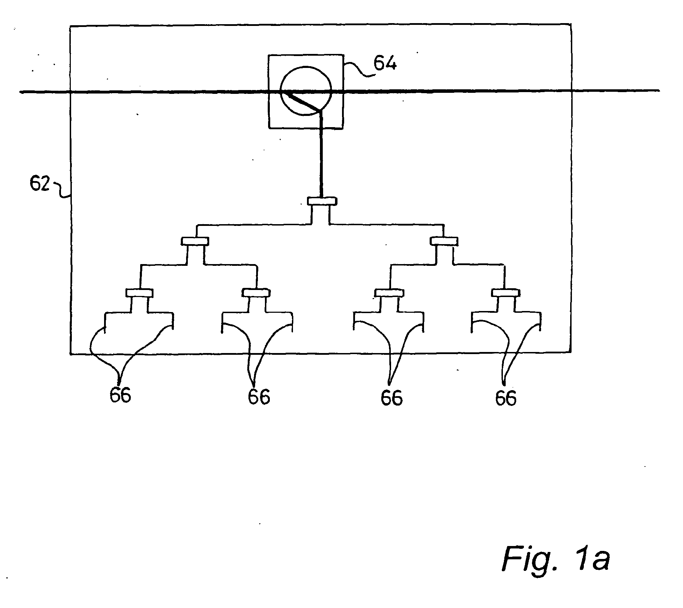

As shown in Figure 1, a typical cable TV (CATV) or commercial TV distribution system in a multiple dwelling unit or apartment block consists of an amplifier 10 feeding a series of distribution taps 20, 30, 40, 50 on each floor of the dwelling unit. The distribution taps feed customer outlets on each floor, a schematic of a tap 60 known in the art being shown in Figure 1a. The tap 60 comprises a housing 62, a directional coupler 64 and a plurality of ports 66.

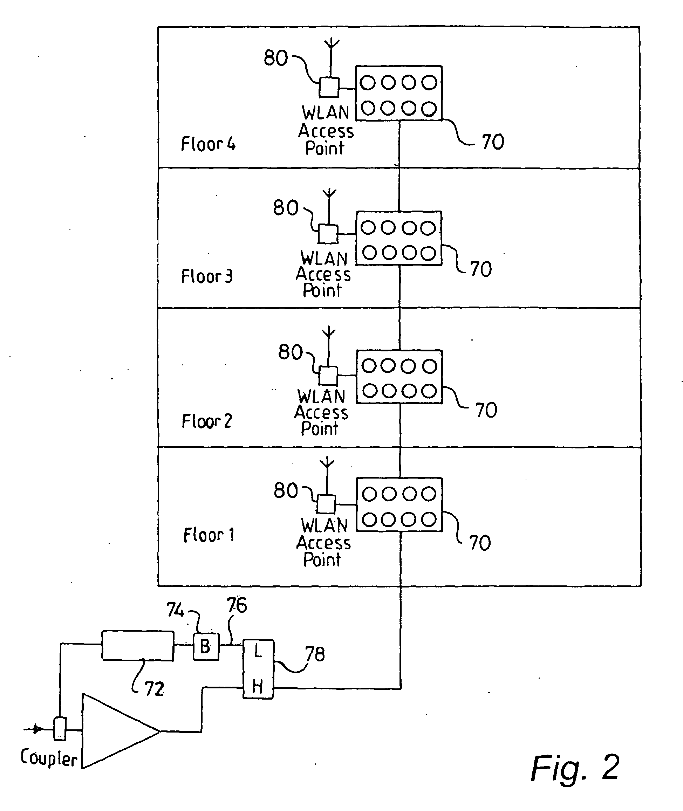

Replacement of the taps with distribution units 70 incorporating wireless LAN access points 80, see Figure 2, allows wireless local area network access points to be distributed throughout a building without any new wiring. This allows a broadband router such as a cable modem, an ATM, xDSL modem or a satellite broadband modem to feed wireless local area network access points throughout a building. Typically a broadband access device 72, such as a cable modem, ADSL modem, satellite VSAT modem, feeds a balun 74 to convert a 10base-T Ethernet feed from a balanced to an unbalanced format. This unbalanced signal 76 is fed by a coax in the diplexer 78 into the cable TV or communal TV network. The wireless LAN access points 80 can then feed locations throughout the building. Typically the television signal will be in the frequency range 50 to 60MHz, with a data signal according to the Ethernet protocol in the frequency range 250KHz to 26MHz.

These wireless LAN access points can then be managed or individual feeds can be traffic shaped to allow individual customers to be managed and to be offered different levels of service.

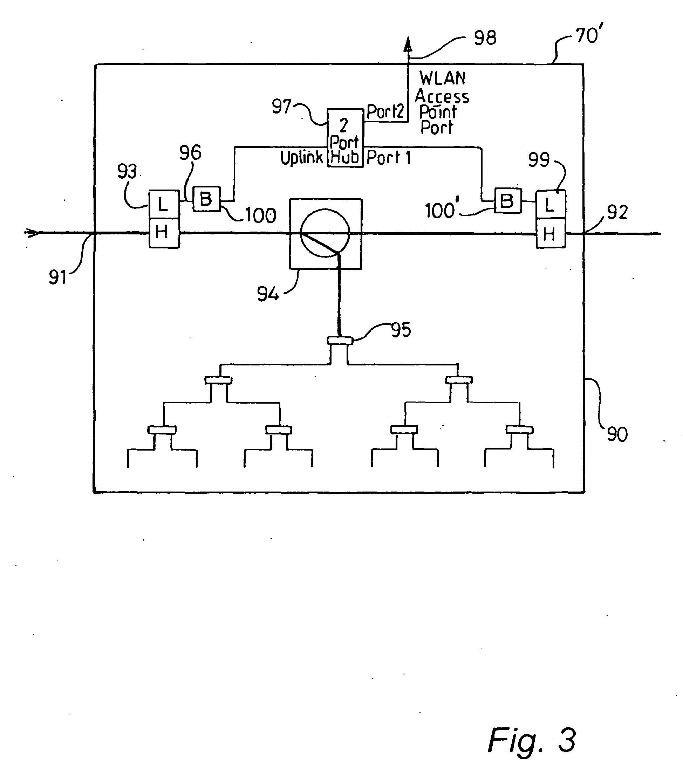

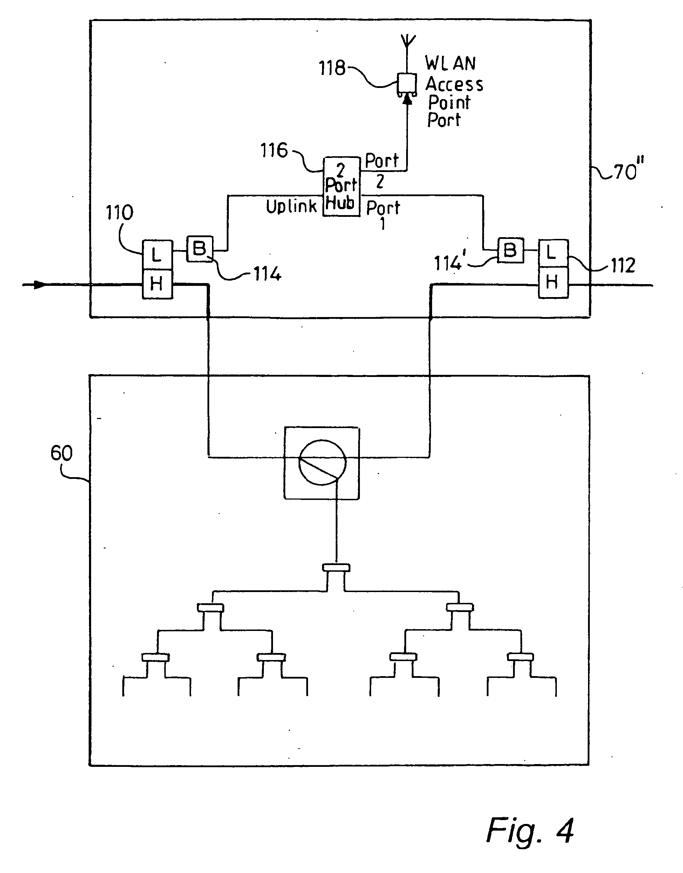

Preferred embodiments of the distribution unit 70 are shown in Figures 3 and 4. The first embodiment shown in Figure 3 replaces the taps 60 in their entirety. The tap 70' diplexes the Ethernet distribution run up the cable TV or communal TV system backbone cable.

The Ethernet tap 70' comprises a housing 90 with a signal inlet 91 and an outlet 92. A diplexer 93 splits the incoming cable TV and Ethernet signals from the main signal and feeds the cable TV signals to a directional coupler 94 and a set of power splitters 95 so as to feed the customer homes with cable TV signals. The Ethernet signal 96 passes to a two port hub 97 so as to feed a wireless local area access point 98 and to be diplexed back into the cable TV signal at diplexer 99. Baluns 100, 100' are used as appropriate.

An alternative embodiment shown in Figure 4 involves use of a tap 60 with a distribution unit 70" which acts as a diplexer hub local area network splitter. This unit 70" comprises diplexers 110, 112, baluns 114, 114" for use where appropriate, and a two port hub 116 for feeding wireless LAN access point 118 and for diplexing the data signal back into the cable TV system at diplexer 112. This unit allows an existing network to be upgraded to broadband without changing distribution taps or re-planning the network.

## Claims

1. A wireless local area network distribution system comprising a television distribution system carrying a main signal from which a television signal (96) and a data signal are derivable, and at least one distribution unit (70) feeding a plurality of customer outlets, **characterised in that** the at least one distribution unit comprises:
(i) means (93) for splitting the television signal and the data signal from the main signal;
(ii) an antenna element (80) for receiving and transmitting the data signal wirelessly to customer outlets;
(iii) means (95; 60) for feeding the television signal direct to customer homes; and
(iv) means (99) for recombining the data signal with the television signal.

2. A wireless local area network distribution system according to claim 1, wherein the television distribution system is a community TV broadcast, distribution system or a cable TV distribution system.

3. A wireless local area network distribution system according to claim 1 or claim 2, wherein the data signal is in accordance with the Ethernet protocol.

4. A wireless local area network distribution system according to any of the preceding claims, wherein the distribution unit (70) comprises at least one port for transmission/reception of the television signal.

5. A wireless local area network distribution system according to claim 4, wherein the at least one port is adapted to communicate with a cable distribution tap (60) associated with an existing television distribution system.

6. A wireless local area network distribution system according to any of the preceding claims, wherein the distribution unit (70) comprises a first diplexer (93) for splitting the television signal and the data signal from the main signal and a local area network (LAN) switch (97) for receiving the data signal from the diplexer (93), the LAN switch having a first outlet (98) for wireless transmission/reception of the data signal and a second outlet for passing the data signal to a second diplexer (99) for recombination of the data signal with the television signal.

7. A distribution unit for use within a wireless local area network distribution system, the distribution unit **characterised by** comprising:
(i) means (93) for splitting a television signal and a data signal from a main signal;
(ii) an antenna element (80) for receiving and transmitting the data signal wirelessly to a plurality of customer outlets;
(iii) means (95;60) for feeding the television signal direct to customer homes; and
(iv) means (99) for recombining the data signal with the television signal.

8. A distribution unit according to claim 7, wherein the data signal is in accordance with the Ethernet protocol.

9. A distribution unit according to claims 7 or 8, further comprising at least one port for transmission/ reception of the television signal.

10. A distribution unit according to claim 9, wherein the at least one port is adapted to communicate with a cable distribution tap (60) associated with an existing television distribution system.

11. A distribution unit in accordance with any of claims 7 to 10, further comprising a first diplexer (93) for splitting the television signal and the data signal from the main signal and a local area network (LAN) switch (97) for receiving the data signal from the diplexer (93), the LAN switch (97) having a first outlet (98) for wireless transmission/reception of the data signal and a second outlet for passing the data signal to a second diplexer (99) for recombination of the data signal with the television signal.

## Patentansprüche

1. Verteilungssystem mit einem drahtlosen lokalen Netzwerk, umfassend ein Fernsehverteilungssystem, das ein Hauptsignal führt, aus dem ein Fernsehsignal (96) und ein Datensignal ableitbar sind, mindestens eine Verteilereinheit (70), die mehrere Kundenanschlüsse speist, **dadurch gekennzeichnet, dass** die mindestens eine Verteilereinheit Folgendes umfasst:
(i) Mittel (93) zum Splitten des Fernsehsignals und des Datensignals aus dem Hauptsignal;
(ii) ein Antennenelement (80) zum drahtlosen Empfangen und Senden des Datensignals zu Kundenanschlüssen;
(iii) Mittel (95, 60) zum direkten Leiten des Fernsehsignals zu Kundenwohnungen; und
(iv) Mittel (99) zum Rekombinieren des Datensignals mit dem Fernsehsignal.

2. Verteilungssystem mit einem drahtlosen lokalen Netzwerk nach Anspruch 1, wobei das Fernsehverteilungssystem ein Community-TV-Ausstrahlungs-Verteilungssystem oder ein Kabel-TV-Verteilungssystem ist.

3. Verteilungssystem mit einem drahtlosen lokalen Netzwerk nach Anspruch 1 oder Anspruch 2, wobei das Datensignal dem Ethernet-Protokoll entspricht.

4. Verteilungssystem mit einem drahtlosen lokalen Netzwerk nach einem der vorhergehenden Ansprüche, wobei die Verteilereinheit (70) mindestens einen Port zum Senden/Empfangen des Fernsehsignals umfasst.

5. Verteilungssystem mit einem drahtlosen lokalen Netzwerk nach Anspruch 4, wobei der mindestens eine Port dafür ausgelegt ist, mit einem Kabelverteilungsabgriff (60) zu kommunizieren, der mit einem existierenden Fernsehverteilungssystem assoziiert ist.

6. Verteilungssystem mit einem drahtlosen lokalen Netzwerk nach einem der vorhergehenden Ansprüche, wobei die Verteilereinheit (70) einen ersten Diplexer (93) zum Splitten des Fernsehsignals und des Datensignals aus dem Hauptsignal und einen Switch (97) des lokalen Netzwerks bzw. LAN zum Empfangen des Datensignals von dem Diplexer (93) umfasst, wobei der LAN-Switch einen ersten Anschluss (98) zum drahtlosen Senden/Empfangen des Datensignals und einen zweiten Anschluss zum Leiten des Datensignals zu einem zweiten Diplexer (99) zur Rekombination des Datensignals mit dem Fernsehsignal aufweist.

7. Verteilungseinheit zur Verwendung in einem Verteilungssystem mit drahtlosem lokalem Netzwerk, wobei die Verteilungseinheit **dadurch gekennzeichnet ist, dass** sie Folgendes umfasst:
(i) Mittel (93) zum Splitten eines Fernsehsignals und eines Datensignals aus einem Hauptsignal;
(ii) ein Antennenelement (80) zum drahtlosen Empfangen und Senden des Datensignals zu mehreren Kundenanschlüssen;
(iii) Mittel (95, 60) zum direkten Leiten des Fernsehsignals zu Kundenwohnungen; und
(iv) Mittel (99) zum Rekombinieren des Datensignals mit dem Fernsehsignal.

8. Verteilungseinheit nach Anspruch 7, wobei das Datensignal dem Ethernet-Protokoll entspricht.

9. Verteilungseinheit nach Anspruch 7 oder 8, die ferner mindestens einen Port zum Senden/Empfangen des Fernsehsignals umfasst.

10. Verteilungseinheit nach Anspruch 9, wobei der mindestens eine Port dafür ausgelegt ist, mit einem Kabelverteilungsabgriff (60) zu kommunizieren, der mit einem existierenden Fernsehverteilungssystem assoziiert ist.

11. Verteilungseinheit nach einem der Ansprüche 7 bis 10, ferner umfassend: einen ersten Diplexer (93) zum Splitten des Fernsehsignals und des Datensignals aus dem Hauptsignal und einen Switch (97) des lokalen Netzwerks bzw. LAN zum Empfangen des Datensignals von dem Diplexer (93), wobei der LAN-Switch (97) einen ersten Anschluss (98) zum drahtlosen Senden/Empfangen des Datensignals und einen zweiten Anschluss zum Leiten des Datensignals zu einem zweiten Diplexer (99) zur Rekombination des Datensignals mit dem Fernsehsignal aufweist.

## Revendications

1. Système de distribution pour réseau local sans fil, comprenant un système de distribution de télévision acheminant un signal principal à partir duquel un signal de télévision (96) et un signal de données peuvent être obtenus, et au moins une unité de distribution (70) alimentant une pluralité de points de sortie d'abonné,
**caractérisé en ce que** ladite au moins une unité de distribution comprend :
(i) un moyen (93) permettant d'extraire le signal de télévision et le signal de données du signal principal ;
(ii) un élément d'antenne (80) permettant de recevoir et de transmettre le signal de données sans fil à des points de sortie d'abonné ;
(iii) un moyen (95 ; 60) permettant d'amener le signal de télévision directement à des résidences d'abonné ; et
(iv) un moyen (99) permettant de recombiner le signal de données au signal de télévision.

2. Système de distribution pour réseau local sans fil selon la revendication 1, le système de distribution de télévision étant un système de distribution d'émissions de télévision communautaire ou un système de distribution de télévision par câble.

3. Système de distribution pour réseau local sans fil selon la revendication 1 ou la revendication 2, le signal de données étant conforme au protocole Ethernet.

4. Système de distribution pour réseau local sans fil selon l'une quelconque des revendications précédentes, l'unité de distribution (70) comprenant au moins un point d'accès pour la transmission/réception du signal de télévision.

5. Système de distribution pour réseau local sans fil selon la revendication 4, ledit au moins un point d'accès étant adapté à communiquer avec une prise de distribution (60) associée à un système de distribution de télévision en place.

6. Système de distribution pour réseau local sans fil selon l'une quelconque des revendications précédentes, l'unité de distribution (70) comprenant un premier diplexeur (93) permettant d'extraire le signal de télévision et le signal de données du signal principal et un commutateur de réseau local (LAN) (97) permettant de recevoir le signal de données issu du diplexeur (93), le commutateur LAN possédant un premier point de sortie (98) pour la transmission/réception sans fil du signal de données et un deuxième point de sortie pour transférer le signal de données à un deuxième diplexeur (99) pour la recombinaison du signal de données au signal de télévision.

7. Unité de distribution destinée à être utilisée au sein d'un système de distribution pour réseau local sans fil, l'unité de distribution étant **caractérisée en ce qu'**elle comprend :
(i) un moyen (93) permettant d'extraire un signal de télévision et un signal de données d'un signal principal ;
(ii) un élément d'antenne (80) permettant de recevoir et de transmettre le signal de données sans fil à une pluralité de points de sortie d'abonné ;
(iii) un moyen (95 ; 60) permettant d'amener le signal de télévision directement à des résidences d'abonné ; et
(iv) un moyen (99) permettant de recombiner le signal de données au signal de télévision.

8. Unité de distribution selon la revendication 7, le signal de données étant conforme au protocole Ethernet.

9. Unité de distribution selon les revendications 7 ou 8, comprenant en outre au moins un point d'accès pour la transmission/réception du signal de télévision.

10. Unité de distribution selon la revendication 9, ledit au moins un point d'accès étant adapté à communiquer avec une prise de distribution (60) associée à un système de distribution de télévision en place.

11. Unité de distribution selon l'une quelconque des revendications 7 à 10, comprenant en outre un premier diplexeur (93) permettant d'extraire le signal de télévision et le signal de données du signal principal et un commutateur de réseau local (LAN) (97) permettant de recevoir le signal de données issu du diplexeur (93), le commutateur LAN (97) possédant un premier point de sortie (98) pour la transmission/réception sans fil du signal de données et un deuxième point de sortie pour transférer le signal de données à un deuxième diplexeur (99) pour la recombinaison du signal de données au signal de télévision.
